# EUROPEAN PATENT APPLICATION

(11) **EP 1 087 491 A2**
(43) Date of publication of application: **28.03.2001**
(21) Application number: 00308315.1
(22) Date of filing: 22.09.2000
(51) Int. Cl.: H02H 3/20, H02H 3/24

(54) **Voltage detector**

(30) Priority: 24.09.1999 ES 9902118
(71) Applicant: Power Controls Iberica, SL, 08225 Terrassa, Barcelona (ES)
(72) Inventor: Luch, Ricardo Morron, 08225 Tarrasa, Barcelona (ES); Telleria, Jose Fernando Mediavilla, 28034 Madrid (ES); Meyer-Haack, Wolfgang, 24534 Neumunster (DE)
(74) Representative: Goode, Ian Roy

(57) **Abstract**

Detector of voltage drops and overvoltages that can be coupled to automatic circuit breakers, formed by a functional assembly comprising an input voltage rectifier stage (DB1), from which a fraction (V1) of the voltage is extracted by means of capacitors (C1 and C2) and resistors (R1 and R2), giving rise to a voltage (Vs) that is stabilized and brought to a reference level by means of Zener diodes (DZ1 and DZ2), a capacitor (C3) and resistors (R3 and R4), said voltage being introduced in corresponding comparators (IC1-1 and IC1-2), in one of which the low voltage anomalies are detected and overvoltages are detected in the other, in order to produce the operation of a tripping mechanism.

## Description

The invention relates to a voltage drop and overvoltage detector that can be coupled to automatic circuit breakers, like the circuit breakers available in installations for cutting off the power supply before any voltage anomaly in the installation.

It is common practice in electric power supply installations to incorporate automatic circuit breakers, which are usually placed in relation to detectors of voltage drops and overvoltages, in order to produce the tripping and consequent opening of the circuit of the power supply installation before any anomaly in the supply voltage of said circuit.

Voltage anomalies in the circuit can be due to excess voltage, for example, because of an accidental interruption of the neutral line in a three-phase alternating current supply, as well because of other failures in the alternating current or direct current lines, voltage drops also being possible below certain values, which also have to be detected.

Up to now, for the detection of excess voltages and voltage drops, different detectors have been used, with the consequent cost of equipment and the need for necessary space entailed for installation.

There must also be a delay in tripping time, in order to avoid untimely trippings due to momentary causes that do not constitute persistent anomalies, but owing to the wide variety of applications, so that it is advisable to be able to vary the tripping limits by an adjustment incorporated in the proper device, which is not adequately contemplated in conventional equipment.

In order to solve these problems a voltage drop and overvoltage detector is proposed, the construction of which provides characteristics that offer very considerable advantages for the purposes for which it is intended.

This detector comprises a functional assembly formed by a circuit that comprises an input voltage rectifier stage and then a stage of stabilization and adjustment of a fraction of the rectified voltage to a reference level, which is introduced in comparators where the low-voltage anomalies are detected in one case and the overvoltage anomalies are detected in another case, giving rise to the operation of a tripping activator of the current cutoff device in the installation.

Operation of the tripping activator takes place with some delay after the detection of any supply voltage anomaly, the delay time being selectively adjustable. A device that offers the following advantages is thus obtained:
- Tripping delay, thereby avoiding untimely trippings due to nonpersistent momentary causes, the delay being selectable for adjustment to the different applications.
- Overvoltage and low voltage tripping limits, with possibility also of selection of said limits.
- Two functions included in the same module, for overvoltage and low voltage tripping, thus occupying less installation space.
- Possibility of an exact adjustment of the tripping limits.
- Low power consumption.
- Reduced level of electromagnetic interferences.
- The behavior of the device does not depend on the characteristics of the tripping activator element (relay), the nature of which is highly variable.
- The requirements of tolerance level and type of components are minimal, resulting in a very low cost of elements.
- For the same reason of low requirements, the number of devices rejected for failure to meet specifications during the manufacturing process is also minimal.

Therefore the detector certainly has some very advantageous characteristics, making it preferable to the conventional devices with the same function.

An embodiment of the invention will now be described, by way of example, with reference to the accompanying drawing, in which:

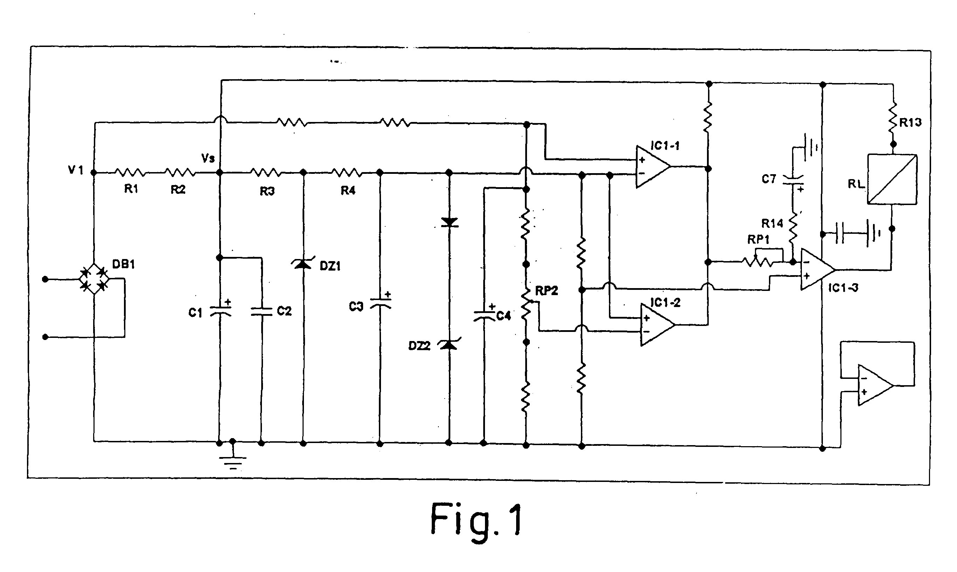

Figure 1 represents a wiring diagram of the detector recommended.

The device comprises a rectifier stage, formed by a diode bridge (DB1), through which the input voltage is rectified in the circuit.

A fraction (V1) of the rectified voltage is then extracted with the aid of capacitors (C1 and C2) and resistors (R1 and R2), a voltage (Vs) being obtained.

The voltage (Vs) is stabilized and brought to the appropriate level by means of Zener diodes (DZ1 and DZ2) and other additional components like the capacitor (C3) and resistors (R3 and R4). That level serves as a reference of stable voltage, being brought to the inputs of corresponding comparators (IC1-1 and IC1-2).

The other inputs of the comparators (IC1-1 and IC1-2) are direct current levels coming from the voltage divider (V1), with a last one filtered by the capacitor (C4).

The comparator (IC1-1) is intended for the detection of low voltage failures, while the purpose of the detector (IC1-2) is to detect failures in case of overvoltage, the tripping limit being selectable by means of a selector (RP2).

During normal service of the circuit, that is, without voltage anomalies, the outputs in (IC1-1 and IC1-2) remain at the level of (Vs). Under this condition, the output of (IC1-1) remains grounded, so that a current is circulated through the resistor (R13) and relay (RL) to the output of (IC1-3), the relay (RL) thereby not being tripped, being maintained by the current passing through it, it being possible to select said current by choice of the appropriate value of (R13).

When a failure occurs, due either to low voltage or overvoltage, the voltage at the outputs of (IC1-1 and IC1-2) is grounded, so that the capacitor (C7) is tripped in a time depending on the value selected by means of a selector (RP1).

During tripping of the capacitor (C7), the voltage in the inversion input of (IC1-3) drops below the voltage in the input without inversion, causing the (IC1-3) to be tipped to (Vs), circulation of the current through the relay (RL) thereby being interrupted and said (RL) being tripped in that situation, moving the tripping lever of the mechanism, for interruption of the current in the circuit of the installation.

The relay (RL) used as activator is a modified differential relay, which has its magnet completely demagnetized; for that reason, only a certain current level can retain the pin of the relay (RL), so that when the current drops below that level, the relay is tripped, moving the tripping lever of the mechanism.

## Claims

1. A detector of voltage comprising a functional assembly comprising an input voltage stage (DB1), from which a fraction (V1) of a rectified voltage is extracted by means of capacitors (C1 and C2) and through resistors (R1 and R2), a voltage (Vs) being obtained, which is stabilized and brought to a reference level by means of Zener diodes (DZ1 and DZ2) and other components, such as a capacitor (C3) and resistors (R3 and R4), the voltage being introduced in corresponding comparators (IC1-1 and IC1-2), in one of which a low voltage anomaly is detected in a first comparator and overvoltage is detected in a second comparator, in order to produce the operation of an activator (IC1-3, RL, C7).

2. The detector according to claim 1 wherein activator operation takes place with some delay after the detection of any supply voltage anomaly, depending on the tripping of a capacitor (C7), the delay being adjustable by means of a selector (RP1).

3. The detector according to claims 1 or 2 wherein the limit of the activation is adjustable by means of a selector (RP2).

4. The detector according to any one of the preceding claims wherein among the functions of the activator, a relay (RL) is used, which has its magnet completely demagnetized, so that only a certain current level can retain the corresponding pin, tripping occurring when the current circulating through the relay (RL) drops below the level.
